# EUROPEAN PATENT APPLICATION

(11) **EP 1 333 388 A2**
(43) Date of publication of application: **06.08.2003**
(21) Application number: 02029034.2
(22) Date of filing: 27.12.2002
(51) Int. Cl.: G06F 17/30

(54) **Imformation providing method, server, program, and storage medium**

(30) Priority: 30.01.2002 JP 2002022296
(71) Applicant: NTT DoCoMo, Inc., Tokyo 100-6150 (JP)
(72) Inventor: Yabe, Toshiyasu, NTT DoCoMo, Inc, Int. Prop. Dept., Chiyoda-ku, Tokyo 100-6150 (JP); Enatsu, Tomoko, NTT DoCoMo, Inc, Int. Prop. Dept., Chiyoda-ku, Tokyo 100-6150 (JP); Okada, Yuji, NTT DoCoMo, Inc, Int. Prop. Dept., Chiyoda-ku, Tokyo 100-6150 (JP); Soga, Makoto, NTT DoCoMo, Inc, Int. Prop. Dept., Chiyoda-ku, Tokyo 100-6150 (JP)
(74) Representative: HOFFMANN EITLE

(57) **Abstract**

By storing data of web page in a different server from the one which stores a web page data, the work is distributed and the load on the server is reduced. Content server 400 provides mobile telephone 100 with web page data which has a statement of directing to get banner advertisement data in web pages from advertisement server 500. Mobile telephone 100 which receives web page data obtains banner advertisement data from advertisement server 500. In order to view a web page linked by the banner advertisement, mobile telephone 100 obtains from advertisement server 500 a URL for a linked web page, and obtains the linked web page data.

## Description

### BACKGROUND OF THE INVENTION

### FIELD OF THE INVENTION

The present invention relates to a technique for distributing and storing in a plurality of servers information for provision to clients.

### DESCRIPTION OF THE RELATED ART

On the World Wide Web (WWW), web servers provide information in web page form written in a markup language such as a Hyper Text Markup Language (HTML). Such information, or web pages, are viewed using a web browser. Some such web pages may contain one or more advertisements.

Among many forms of advertisements which appear on web pages are so-called banner advertisements, which display in a rectangular area in a web page, and are linked to the web page of the respective advertiser. By clicking on the link, a user displays the advertiser's web page.

When displaying a web page in a web browser, a client and a server specified by a Uniform Resource Locator (URL) communicate with each other using Hyper Text Transfer Protocol (HTTP). Also, to display a web page containing a banner advertisement, first, a connection between the client and the server is established to obtain HTML data of the web page, a request and a reply are exchanged, and finally disconnection between the client and the server is carried out (hereinafter, referred to collectively as a "session"). To obtain data of the banner advertisement, once again a connection between the client and the server is established, a request for information and a reply are exchanged, and disconnection between the client and the server is carried out. When there are several banner advertisements contained in a web page, several such sessions occur.

As described above, when displaying a web page containing a banner advertisement, a plurality of sessions take place. In a case that a server contains popular content, it may suffer from excessive session load. To cope with such a session load it is necessary for the administrator of the server providing the advertisements must make special provision in setting up a system.

In addition to the foregoing, other problems exist. For example, when an operator of the web page has contracted to display advertisements of several advertisers, the operator has to manage data of several banner advertisements. When there are a plurality of banner advertisements in a web page or banner advertisements are changed depending on a time, the amount of data which must be managed for the banner advertisements can become huge. To deal with such a situation, data management for banner advertisements in web pages is required, which hinders the creation and display of web pages by an operator.

### BRIEF SUMMARY OF THE INVENTION

The present invention is made in light of the above circumstances, and has as its objective the provision of an information providing method, a server, a program, and a storage medium each of which are designed to reduce a load imposed on operators of servers that provide web pages, and a load on the servers.

To solve the stated problems, the present invention provides an information providing method comprising:
a page request sending step for sending by a communication terminal to a second server device a page request for obtaining a first page generated by a first data file and a second data file, the communication terminal being capable of communicating, via a communication network, with each of a first server device storing the first data file and the second server device storing the second data file which includes a first data identifier for identifying the first data file and a first server identifier for identifying the first server device;
a page data sending step for sending, by the second server device, the second data file to the communication terminal in response to the page request;
a first data request sending step for sending by the communication terminal to the first server device, according to a content of the second data file and the first server identifier, a first data request including the first data identifier, the first data identifier being for obtaining the first data file;
a first data sending step for sending by the first server device to the communication terminal the first data file identified by the first data identifier in the first data request in response to the first data request; and
a page generating step for generating, by the communication terminal, the first page by using the second data file sent from the second server device and the first data file sent from the first server device.

Also, the present invention provides a server device comprising:
first data request receiving means for receiving a first data request which includes a first data identifier, and which is sent from a communication terminal for obtaining a first data file based on a second data file having a first data identifier identifying a first data file and a server device identifier for identifying a server device which stores the first data file; and
first data sending means for sending to the communication terminal, in response to the first data request, the first data file identified by the first data identifier in the first data request.

Also, the present invention provides a program for causing a computer which is able to communicate with a communication terminal and has a storage unit for storing data to function as;
first data request receiving means for receiving a first data request which includes a first data identifier, and which is sent from a communication terminal for obtaining a first data file based on a second data file having a first data identifier identifying a first data file and a server device identifier for identifying a server device which stores the first data file; and
first data sending means for sending to the communication terminal, in response to the first data request, the first data file identified by the first data identifier included in the first data request.

Also, the present invention provides a computer readable storage medium for storing the program for causing a computer, which is able to communicate with a communication terminal and has a storage unit for storing data, to function as;
first data request receiving means for receiving a first data request which includes a first data identifier, and which is sent from a communication terminal for obtaining a first data file based on a second data file having a first data identifier identifying a first data file and a server device identifier for identifying a server device which stores the first data file; and
first data sending means for sending to the communication terminal, in response to the first data request, the first data file identified by the first data identifier included in the first data request.

As described above, the present invention makes it unnecessary for a business operator operating a server for providing content to store data for banner advertisements in web pages in the server which provides content. Accordingly, it becomes possible to divide work between that for creating, managing and editing data of banner advertisements, and that for creating web pages. Consequently, operators of web pages stored in servers need no longer manage or edit banner advertisement data, and are thus free to devote their energy to the creation of web pages. Also, regarding connections between clients and servers for displaying web pages containing banner advertisements, sessions are distributed to servers which provide content and to servers which provide advertisements, thereby enabling a burden on servers to be reduced and a deterioration in communication paths to be avoided.

### BRIEF DESCRIPTION OF THE DRAWINGS

Fig. 1 is a block diagram illustrating the entire configuration of the client server system according to the present embodiment of the present invention.
Fig. 2 is a block diagram illustrating a hardware configuration of a mobile telephone 100 according to the embodiment of the present invention.
Fig. 3 is a block diagram illustrating a hardware configuration of a content server 400 according to the embodiment of the present invention.
Fig. 4 is a block diagram illustrating a hardware configuration of an advertisement server 500 according to the embodiment of the present invention.
Fig. 5 is a diagram showing an example of data stored in the advertisement server 500 according to the embodiment of the present invention.
Fig. 6 is a block diagram illustrating a hardware configuration of an advertiser server 600 according to the embodiment of the present invention.
Fig. 7 is a diagram illustrating web page data written in CHTML and stored in a storage unit 408 of the content server 400 according to the embodiment of the present invention.
Fig. 8 is a sequence diagram illustrating an operation of the embodiment of the present invention.
Fig. 9 is a diagram showing screen image examples displayed by the web browser executed in mobile telephone 100 according to the embodiment of the present invention.
Fig. 10 is a diagram illustrating a modification of web page data written in CHTML and stored in the storage unit 408 of content server 400 according to the embodiment of the present invention.

### DETAILED DESCRIPTION OF THE INVENTION

With reference to the drawings, one embodiment of the present invention will be described. However, the present invention is in no way limited to the following embodiment, and a variety of possible embodiments exist which fall within the scope of the Claims.

### [1. Embodiment]

### [1-1. Configuration of the Embodiment]

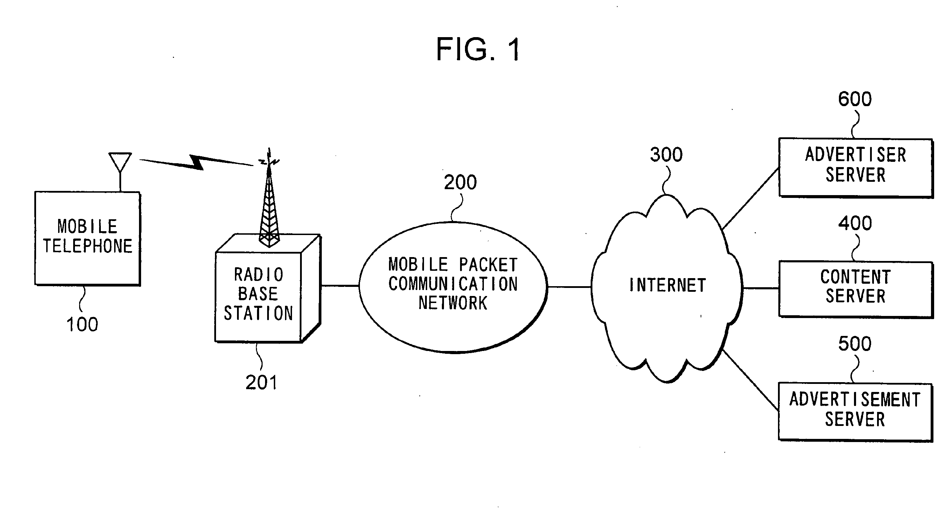

Fig. 1 is a block diagram illustrating the entire configuration of the client server system according to the embodiment of the present invention. A mobile telephone 100 is a mobile telephone owned by a user (not shown), and can receive a packet communication service provided by a mobile packet communication network 200 via a radio base station 201 and a communication service provided by a mobile telephone network (not shown). In the present embodiment, a plurality of mobile telephones can obtain data for web pages. However, for the sake of brevity, only one mobile telephone 100 is shown in Fig. 1. Also, regarding the radio base stations, a plurality of radio base stations are connected to mobile packet communication network 200 in order to provide a larger communication area to mobile telephones. However, for the sake of brevity, only one radio base station 201 is shown in Fig. 1.

Mobile packet communication network 200 is a communication network for providing a mobile data communication service, and connects mobile telephones with other networks such as a Local Area Network (LAN), or the Internet 300. Mobile packet communication network 200 is connected with Internet 300 via an unshown packet gateway/relay device which is provided in mobile packet communication network 200. The packet gateway/relay device includes a gateway server which carries out a protocol conversion between a communication protocol used in mobile packet communication network 200 and the Transmission Control Protocol/Internet Protocol (TCP/IP), a communication protocol used in Internet 300. Mobile telephone 100 can conduct packet communication with a web server connected to Internet 300 by using a communication service provided by mobile packet communication network 200.

Content server 400 is a server operated by a business operator which provides information to a client device. Content server 400 has a function to conduct packet communication with a client device via Internet 300. Content server 400 stores data of web pages, and in response to a request from a client device, sends data of web pages to a client via Internet 300. On Internet 300, many content servers exist which provide web pages to a client device. However, for the sake of brevity, only one content server 300 is shown in Fig. 1.

Advertisement server 500 provides a client with data of a banner advertisement which is displayed in a web page provided by content server 400. Advertisement server 500 has a function to conduct packet communication with a client device via Internet 300. Advertisement server 500 stores data of banner advertisements displayed in web pages provided by content server 400, and, in response to a request from a client device, sends data of banner advertisements to the client via Internet 300. In this embodiment, there can be a plurality of advertisement servers that provide banner advertisements to clients. However, for the sake of brevity, for content server 400, only one advertisement server 300 is shown in Fig. 1.

Advertiser server 600 is a server operated by a business operator which requests banner advertisements to be displayed on a web page provided by content server 400. Advertiser server 600 has a function to conduct packet communication with a client device via Internet 300. Advertiser server 600 stores data of web pages, and, in response to a request from a client device, sends data of web pages to the client device via Internet 300. In this embodiment, there a plurality of advertiser servers may exist. However, for the sake of brevity as content server 400, only one advertiser server 600 is shown in Fig. 1.

### [1-1-1. Configuration of the mobile telephone]

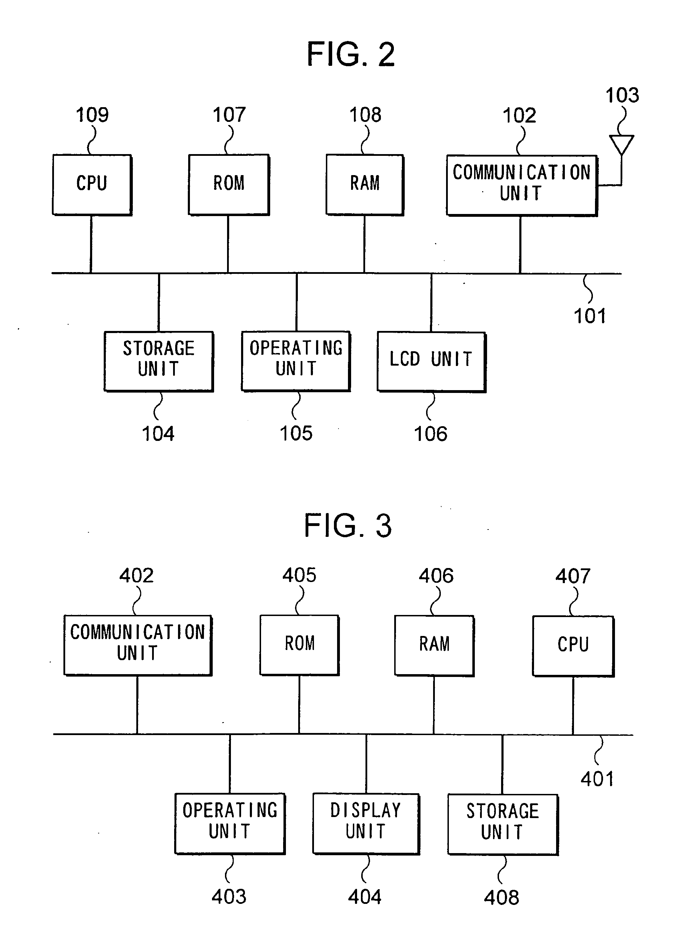

Fig. 2 is a block diagram illustrating a hardware configuration of mobile telephone 100 according to the present embodiment. Each unit in mobile telephone 100 except antenna 103 is connected to each other via bus 101.

Communication unit 102 has an antenna 103 and has a function of conducting wireless communication with radio base station 201. Under control of central processing unit (CPU) 109, communication unit 102 sends to and receives from radio base station 201 data used for telephone voice or packet communication via antenna 103. Storage unit 104 has a non-volatile memory (not shown), and stores information for controlling mobile telephone 100. Information in storage unit 104 is read and written under control of CPU 109. Operating unit 105 has number keys (not shown), character keys, and a plurality of keys for inputting operating instructions. A user of mobile telephone 100 uses operating unit 105 to input instructions to operate mobile telephone 100. In response to the user's operation, operating unit 105 outputs to CPU 109 signals indicating the content of the user's operation. LCD unit 106 has an LCD panel and control circuit that controls the LCD panel (neither shown). LCD unit 106 displays characters, a graphic screen, and a menu screen to control mobile telephone 100.

Read Only Memory (ROM) 107 stores a telephone number of mobile telephone 100, an initialization program for initializing units of mobile telephone 100, an operating system (OS) of mobile telephone 100, a web browser to view web pages, and so on. Read Access Memory (RAM) 108 is used as a work area when CPU 109 executes a program. Also, data used by the program executed by CPU 109 is stored temporarily in RAM 108.

When a user turns on mobile telephone by using a key of operating unit 105, CPU 109 reads the initialization program from ROM 107 and initializes CPU 109 itself and other units by controlling the units of mobile telephone 100. Then, CPU 109 reads the OS from ROM 107 and executes the OS. When signals indicating the user's operation are input to CPU 109 from operating unit 105, the OS executed by CPU 109 interprets the user's operation, and based on the user's operation, CPU 109 controls the various units of mobile telephone 100.

The web browser stored in ROM 107 has functions to conduct HTTP communication, to display a web page based web page data obtained from a server, and to send and receive data to/from a server based on the information included in the data of the web page.

### [1-1-2. Configuration of the content server]

Fig. 3 is a block diagram illustrating a hardware configuration of content server 400 according to the present embodiment. Units of content server 400 are connected with each other by bus 401.

Communication unit 402 is connected to Internet 300, and under control of CPU 407 is able to conduct data communication with a client device. Operating unit 403 has an keyboard and mouse (neither shown) and receives instructions for operating content server 400. In response to a user's operation, operating unit 403 outputs to CPU 407 signals indicating the user's operation. Display unit 404 has a Cathode Ray Tube (CRT) and a drive circuit to drive the CRT (neither shown). Under control of CPU 407, display unit 404 displays a menu screen to operate content server 400, or a screen to create a web page. Storage unit 408 has a hard disk (not shown), and stores data for web pages and data that make up web pages that are provided by content server 400.

ROM 405 stores an initialization program for initializing CPU 407 and the units of content server 400, a server program to send and receive data based on HTTP, a program to create web page data, and so on. RAM 406 is used as work area of CPU 407, and enables data used by the program executed by CPU 407 to be temporarily stored. When content server 400 is turned on, the initialization program is read out from ROM 405. Then, initialization of CPU 407 is carried out, and CPU 407 controls the units of content server 400 to initiate the units of content server 400. After initialization is conducted, CPU 407 reads the above-mentioned server program from ROM 405 and the program is executed. Then, in response to a request from a device that is to be a client, web page data, which is specified by a URL, and is stored in storage unit 408, is read out and sent to the client device.

### [1-1-3. Configuration of the advertisement server]

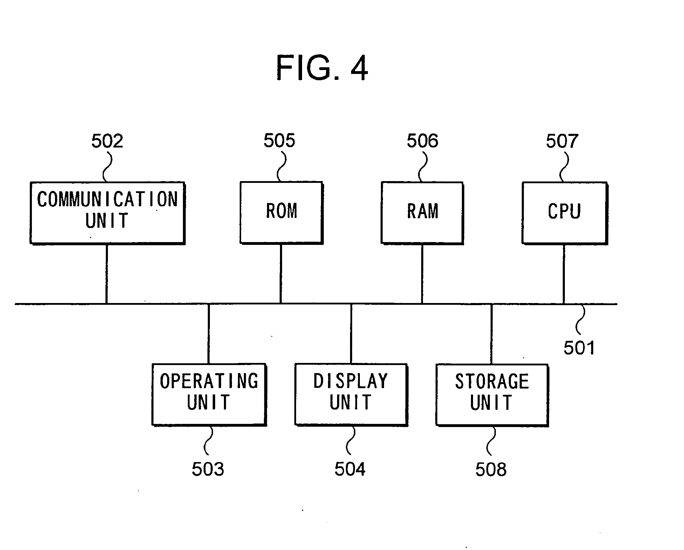

Fig. 4 is a block diagram illustrating a hardware configuration of advertisement server 500 according to the present embodiment of the present invention. Each unit of advertisement server 500 is connected to each other by bus 501. In advertisement server 500, since a unit with the same name as in content server 400 has the same function as the unit in content server 400, explanation of this same unit is omitted. Below, explanation only for those units which differ from the unit in content server 400 will be given.

Under the control of CPU 507, display unit 504 displays a menu screen to operate advertisement server 500, or a screen to create a banner advertisement which is to be displayed in a web page.

ROM 505 stores an initialization program for initializing CPU 507 and the units of advertisement server 500, an advertisement server program to receive a request from clients and send advertisement data for the request based on HTTP, a program to create web page data, and so on. RAM 506 is used as a work area for CPU 507, and temporarily stores data used by the program executed by CPU 507. When advertisement server 500 is turned on and power is supplied to each unit of advertisement server 500, the initialization program is read out from ROM 505 into CPU 507. Then, initialization of CPU 507 is carried out, and CPU 507 controls each unit of advertisement server 500 to initiate the units of advertisement server 500. After initialization is conducted, CPU 507 reads the above-mentioned advertisement server program from ROM 505 and the program is executed.

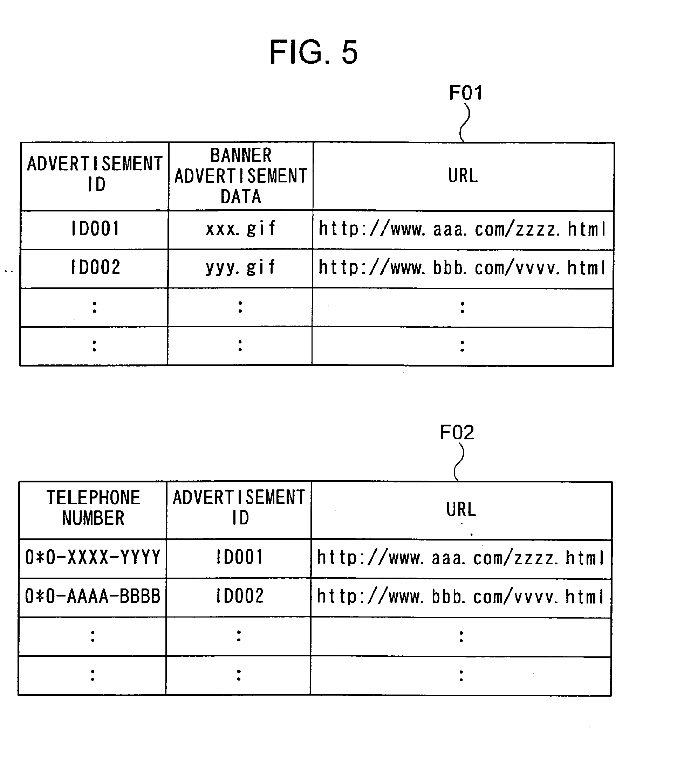

Storage unit 508 has a hard disk (not shown), and stores data for banner advertisements which are provided by advertisement server 500, and also data for identifying the banner advertisement; it also has an area for storing URL which is used to obtain web pages provided by an advertiser of the banner advertisement. F01 in Fig. 5 shows an example of stored data in the storage unit. As shown in F01 in Fig. 5, these data are related to data that are used as a key for identifying the banner advertisement, and are stored. Also, storage unit 508 has areas for, when sending data of banner advertisement to a client, storing data identifying a client, data identifying a banner advertisement, and a URL for obtaining a web page provided by the advertiser of the banner advertisement. F02 in Fig. 5 shows an example of these data stored in the storage unit. As shown in F02 in Fig. 5, these data are related to data that are used as a key for identifying a client, and are stored.

### [1-1-4. Configuration of the advertiser server]

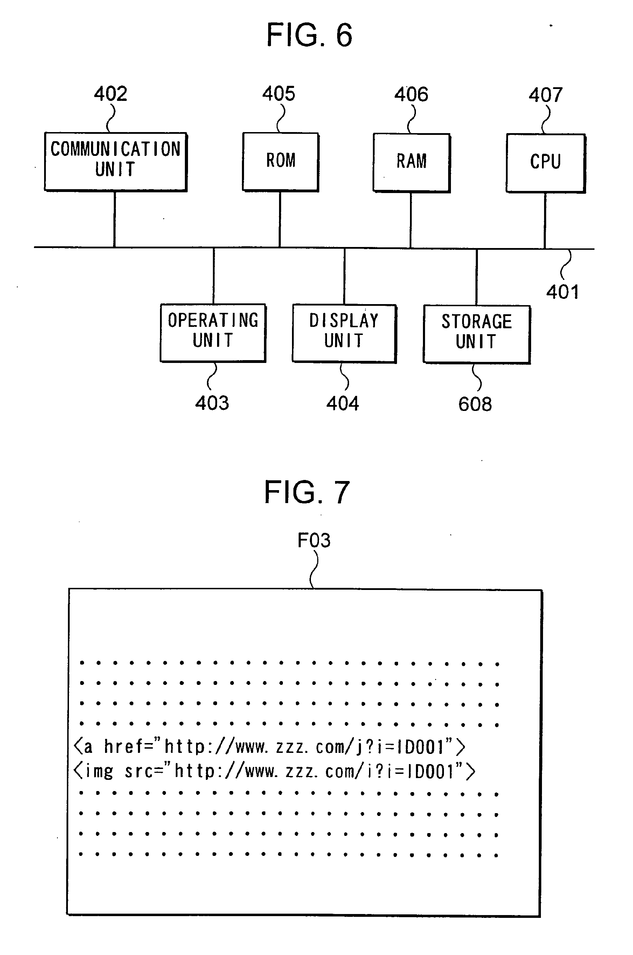

Fig. 6 is a block diagram illustrating a hardware configuration of advertiser server 600 according to the present embodiment of the present invention. As shown in Fig. 6, advertisement server 600 has a similar configuration to content server 400. The same units as in content server 400 are identified by the same reference numerals, and explanation of them is omitted. The difference between advertiser server 600 and content server 400 resides in the web page data, stored in storage unit 608, to be provided to clients.

### [1-2. Operation of the embodiment]

Next, operation of the embodiment will be described.

It is assumed that, in storage unit 408 of content server 400, web page data created in Compact Hyper Text Markup Language (CHTML) by the business operator that operates content server 400 is stored. It is assumed in the embodiment below that web pages provided by content server 400 and advertiser server 600 are written in CHTML.

The CHTML data F03 shown in Fig. 7 illustrates web page data stored in storage unit 408 of content server 400. A part of text relating to a banner advertisement is written as shown in Fig. 7. This data file has a name [xxxx.htm], and the URL to obtain this web page data is [http://www.xxx.com/xxxx.htm]. In the CHTML data F03, [www.xxx.com] is a server name that stores banner advertisement data. [ID001] is an identifier that identifies a banner advertisement that is to be displayed in a web page provided by content server 400.

It is assumed that, in storage unit 508 of advertisement server 500, banner advertisement data that is to be displayed in a web page that is stored in storage unit 408 of content server 400, advertisement ID identifying banner advertisement data, and URL for obtaining web page from advertisers which are link targets of banner advertisements are related to each other and stored. Data table F01 shown in Fig. 5 is a diagram illustrating a data table of banner advertisement data stored in storage unit 508 of advertisement server 500.

Also, it is assumed, in storage unit 608 of advertiser server 600, web page data that is provided to client devices are stored. It is assumed that the URL of the web page that advertiser server 600 provides is [http://www.aaa.com/zzzz.html].

It is also assumed that the telephone number of mobile telephone 100 is 0*0-XXXX-YYYY.

### [1-2-1. Obtaining a web page]

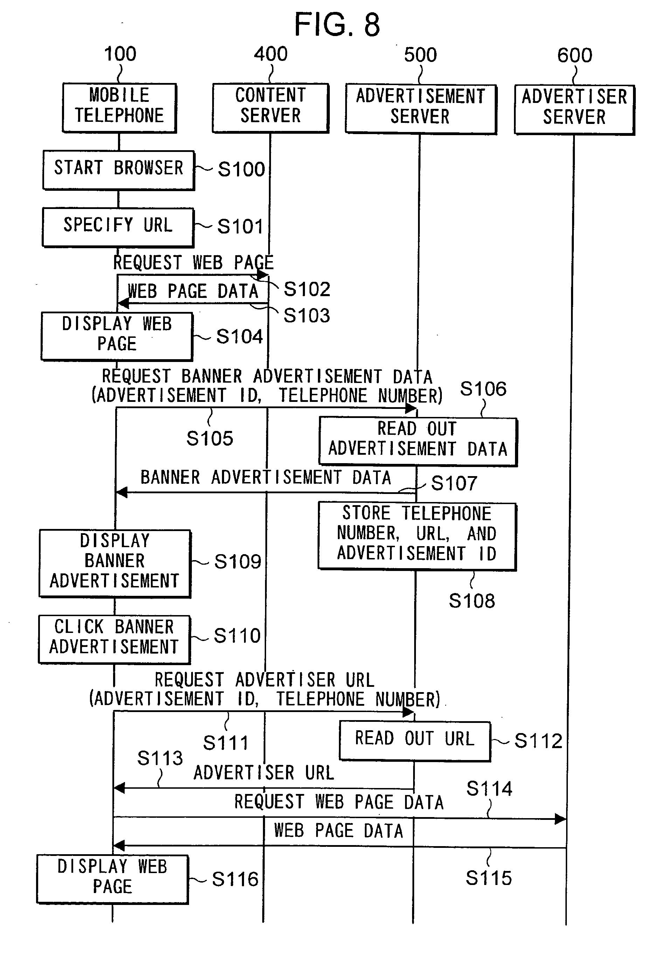

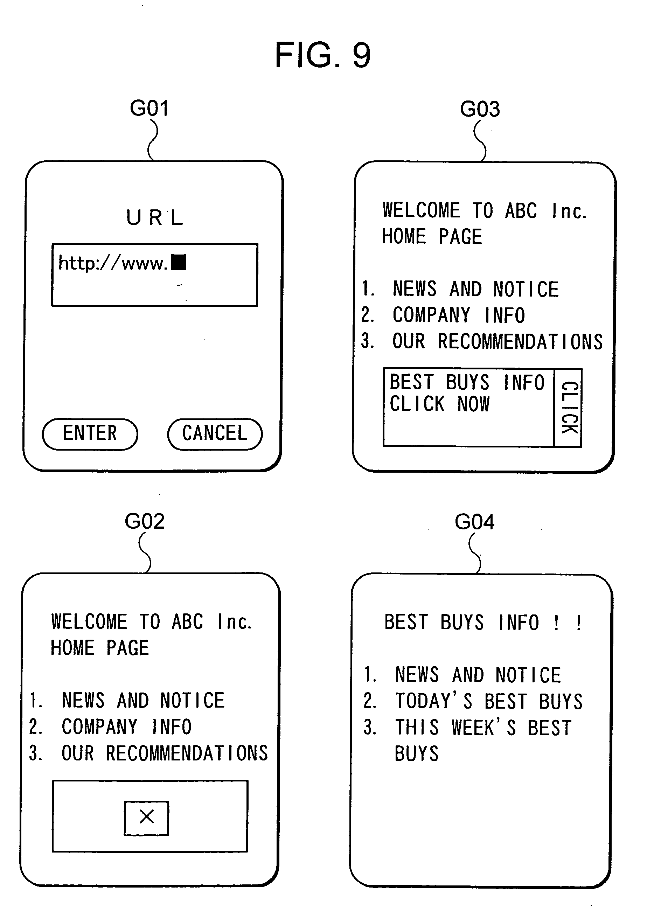

Fig. 8 is a sequence diagram illustrating an operation from when mobile telephone 100 obtains web page data from content server 400, and when the user of mobile telephone operates a banner advertisement, and until when the web page provided by the advertiser of the banner advertisement is displayed. When operating unit 105 of mobile telephone 100 is operated by the user, and the instruction to start a web browser is input, the signal indicating the operation is sent from operating unit 105 to CPU 109. When the signal is input to CPU 109, the OS interprets the input, and based on the user's operation, CPU 109 reads from ROM 107 the web browser program and the web browser program is executed by CPU 109 (step S100). When the web browser is executed by CPU 109, the web page screen image G01 illustrated in Fig. 9 is displayed.

After a web browser is started, CPU 109 enters a state where CPU 109 waits for an input containing the user's instruction produced by the operation of operating unit 105. When the URL [http://www.xxx.com/xxxx.htm] of the web page which content server 400 provides is input, and the instruction to display the web page is input (step S101), by the function of the web browser which CPU 109 is executing, a request to obtain the web page (xxxx.htm) from the server specified by the URL is sent to the server specified by the input URL (step S102). This request to obtain web pages is sent via antenna 103 by controlling communication unit 102 by CPU 109. The request is received by radio base station 201 that covers a radio service area where mobile telephone 100 exists. The request to obtain web page that is received by radio base station 201 is sent to content server 400 with a domain name [www.xxx.com] via mobile packet communication network 200 and Internet 300.

When communication unit 402 of content server 400 receives the request to obtain web pages, the request is sent to CPU 407 of content server 400. When CPU 407 receives the request to obtain web pages, CPU 407 reads from storage unit 408 data to display a web page in the web browser (data is referred to as web page data hereinafter). After the specified web page data (xxxx.htm) is read out, CPU 407 controls communication unit 402 to send the read-out web page data (step S103). The web page data is sent via Internet 300 and mobile packet communication network 200 to radio base station 201 which covers the radio service area in which mobile telephone 100 is present. Radio base station 201 sends the web page data to mobile telephone 100.

At mobile telephone 100, when communication unit 102 receives the web page data via antenna 103, the web page data is sent to CPU 109. When the web page data is input to CPU 109, by the function of the web browser executed by CPU 109, a web page image is displayed in accordance with the web page data. LCD unit 106 is controlled by CPU 109 that executes the web browser, and web page screen image G02 illustrated in Fig. 9 is displayed on a LCD panel (not shown) of LCD unit 106 (step S104). Since content server 400 does not have data for the banner advertisement part, when the web page screen image G02 is displayed, mobile telephone 100 has not yet obtained the data for the banner advertisement. Therefore, in the area of the web page where the banner advertisement is to be displayed, an icon appears indicating that the image data to be displayed has not been obtained as shown in web page screen image G02 in Fig. 9.

Data of the web page shown in Fig. 7 indicates that the data for the banner advertisement area is stored in advertisement server 500. Therefore, obtaining data of the banner advertisement is carried out next.

By the function of the web browser which CPU 109 of mobile telephone 100 executes, an advertisement data request is generated requesting from advertisement server 500 specified by a domain name relating to the banner advertisement included in the web page data, data for the banner advertisement specified by an advertisement ID included in the web page data. In this case, since the advertisement ID included in the web page content server 400 has provided is [ID001] and the telephone number of mobile telephone 100 is [0*0-XXXX-YYYY], an advertisement data request with an advertisement ID [ID001] and a telephone number [0*0-XXXX-YYYY] is generated. The advertisement data request is sent via antenna 103 by controlling communication unit 102 by CPU 109, and radio base station 201 receives it. Since the name of the server providing the banner advertisement specified by the advertisement ID is [www.zzz.com], the advertisement data request received by radio base station 201 is sent to advertisement server 500 via mobile packet communication network 200 and Internet 300 (step S105).

When communication unit 502 of advertisement server 500 receives the advertisement data request, the received advertisement data request is sent to CPU 507 of advertisement server 500. When CPU 507 receives the advertisement data request from communication unit 502, CPU 507 reads out the banner advertisement data corresponding to the advertisement ID included in the advertisement data request from storage unit 508 (step S106). In this case, since the advertisement ID included in the advertisement data request is [ID001], image data [xxx.gif] as shown data table F01 in Fig. 5 is read out from the storage unit 508.

After the banner advertisement data is read out, CPU 507 controls communication unit 502 and the read-out banner advertisement data is sent (step S107). The banner advertisement data is sent to radio base station 201 which covers the radio service area in which mobile telephone 100 is present via Internet 300 and mobile packet communication network 200, and the banner advertisement data is sent to mobile telephone 100 from the radio base station 201.

After sending the banner advertisement data, CPU 507 stores into storage unit 508 data having advertisement ID, telephone number of mobile telephone 100 included in the banner advertisement request, and URL to obtain the web pages the advertiser of the banner advertisement data provides (step S108). In the process, the telephone number and the URL are related to the advertisement ID. In this case, the advertisement ID is [ID001], the telephone number included in the advertisement data request is [0*0-XXXX-YYYY], and the URL to obtain the web pages of the advertiser of the banner advertisement of the advertisement ID [DI001] is [http://www.aaa.com/zzzz.html]. Therefore, the data as mentioned above is stored in the data format F02 illustrated in Fig. 5.

When communication unit 102 of mobile telephone 100 receives the banner advertisement data via antenna 103, the received banner advertisement data is sent to CPU 109. When the banner advertisement data is input to CPU 109, by the function of the web browser which CPU 109 executes, a screen is displayed on the basis of the web page data. CPU 109 controls LCD unit 106, and the web page image G03 with banner advertisement shown in Fig. 9 is displayed on an LCD panel (not shown) of the LCD unit (step S109).

### [1-2-2. Displaying a web page of the advertiser of the banner advertisement]

After a screen by a web page provided by content server 400 is displayed on LCD unit 106 of mobile telephone 100, to display a web page related to a banner advertisement, the user of mobile telephone 100 operates operating unit 105 to select an image of the banner advertisement on the web page, thereby instructing display of the web page which is provided by an advertiser specified by the banner advertisement (step S110). After a web page with the banner advertisement is displayed, CPU 109 enters a state where it waits for a signal containing the user's instruction input by operation of operating unit 105. After a web page with a banner advertisement is displayed, when an instruction to display a web page which the advertiser of the banner advertisement provides is input by a click operation conducted on operating unit 105 (step S110), the signal indicating the content of the operation is sent from operating unit 105 to CPU 109.

At mobile telephone 110, when the signal indicating the content of the operation mentioned in the explanation for step S110 above is input to CPU 109 by operation of operating unit 105, by the function of the web browser which the CPU 109 is executing, a URL request for requesting a URL to obtain a web page which the advertiser of the banner advertisement provides is sent to advertisement server 500 specified by a domain name included in the web page data (step S111). This URL request includes an advertisement ID and the telephone number of mobile telephone 100, and is sent via antenna 103 by controlling communication unit 102 from CPU 109. The URL request is received by radio base station 201, and sent to advertisement server 500 via mobile packet communication network 200 and Internet 300.

When communication unit 502 of advertisement server 500 receives the URL request, the received URL request is sent to CPU 507 of advertisement server 500. When CPU 507 receives the URL request from communication unit 502, CPU 507 searches for the telephone number of mobile telephone 100 which is included in the URL request from data format F02 shown in Fig. 5 which is stored in storage unit 508. When the telephone number included in the URL request is found from data format F02 shown in Fig. 5, a URL corresponding to the advertisement ID included in the URL request is read out. In this case, the telephone number of the mobile telephone is [0*0-XXXX-YYYY] and the advertisement ID is [ID001], therefore [http://www.aaa.com/zzzz.html] is read out (step S112).

After the above mentioned URL is read out from storage unit 508, CPU 507 controls communication unit 502 and sends the data representing the read-out URL (step S113). The data representing read-out URL is sent, via Internet 300 and mobile packet communication network 200, to radio base station 201 which covers the radio service area in which mobile telephone 100 is present. The data representing read-out URL is sent from radio base station 201 to mobile telephone 100.

When communication unit 102 of mobile telephone 100 receives the data representing the URL sent from advertisement server 500, the received data is sent to CPU 109. When the data representing the URL is input to CPU 109, by the function of the web browser which CPU 109 executes, a request for data of the web page, which is provided by the advertiser server 600 and specified by the above URL, is sent to advertiser server 600 specified by the domain name in the URL indicated by the received data (step S114). The request for the web page to advertiser server 600 is sent by controlling communication unit 102 by CPU 109 via antenna 103, and is received by radio base station 201 which covers the radio service area in which mobile telephone 100 is present. The request for the web page is sent to advertiser server 600 via mobile packet communication network 200 and Internet 300.

When communication unit 402 of advertiser server 600 receives the web page request, the received web page request is sent to CPU 407 of advertiser server 600. When CPU 407 receives the web page request from communication unit 402, CPU 407 reads the web page data from storage unit 608. After the reading out the web page data, CPU 407 controls communication unit 402, and the read-out web page data is sent. The web page data is sent to radio base station 201 via Internet 300 and mobile packet communication network 200, and then sent from radio base station 201 to mobile telephone 100 (step S115).

At mobile telephone 100, communication unit 102 receives the web page data of advertiser server 600 via antenna 103, and the received web page data is sent to CPU 109. When the received web page data is input to CPU 109, by the function of the web browser which CPU 109 executes, the web page image is displayed based on the web page data of advertiser server 600. CPU 109 controls LCD unit 106, and the web page image G04 of advertiser server 600 shown in Fig. 9 is displayed on an LCD panel (not shown) of the LCD unit 106 (step S116).

As described above, according to the present embodiment of the present invention, by providing a server which provides banner advertisements, a work burden imposed on an operator of a web page including banner advertisements can be significantly reduced.

Also, according to the present embodiment of the present invention, by providing a server which provides banner advertisements, even when a large number of access requests are received at a server that provides a popular content, a burden on the server is also significantly reduced since a session to obtain banner advertisement data is conducted with advertisement server 500.

Also, according to the present embodiment of the present invention, even when the advertiser has changed, it is not necessary to change a link to a banner advertisement in web pages in content server 400. Therefore, it is possible to reduce a burden on an operator of content server 400.

Also, according to the present embodiment of the present invention, when an advertiser places an advertisement on web pages of several content servers, it is not necessary to provide data for the banner advertisements on each content server. A single server suffices to manage banner advertisements, and thus it is possible to provide the same banner advertisement to several content servers.

### [2. Modifications]

In the above explanation of the present embodiment, only one advertisement server exists to which a request is made to obtain a banner advertisement. However, when several banner advertisements are contained in a web page, it is possible to make requests to different servers for respective banner advertisements.

In the above explanation of the present embodiment, data which constitutes the web page and is obtained from another server is data for a banner advertisement. However, data which is obtained from the other server may be data other than banner advertisement data such as image data or music data.

In the above explanation of the present embodiment, CHTML is used as a language for writing web pages. However, other markup languages such as HTML may be used.

In the above explanation of the present embodiment, a computer device which becomes a client device is mobile telephone 100. However, a computer device which becomes a client device may be a PHS (Personal Handyphone System) terminal, a PDA (Personal Digital Assistance) with a unit capable of receiving a service which mobile packet communication network 200 provides, or a portable personal computer such as a notebook computer.

In the above explanation of the present embodiment, a terminal which becomes a client accesses servers via mobile packet communication network 200 using mobile telephone 100. However, a terminal which becomes a client may be a computer device connected to Internet 300.

Also, a communication network that mobile telephone 100 uses to communicate with server devices connected to Internet 300 is not limited to mobile packet communication network 200, and a communication network for IMT-2000 (International Mobile Telecommunications-2000) may also be used. However, in such a case mobile telephones are those which support IMT-2000. Also, mobile telephone 100 may connect to servers of an Internet service provider by dial-up connection, and communicate with server devices connected to Internet 300.

In the above explanation of the present embodiment, one advertisement is related to one advertisement ID. However, it is possible to provide a clock in advertisement server 500, and thereby change on a time basis banner advertisements that correspond to one advertisement ID.

Also, it is possible to create a program which uses random numbers to select advertisement ID from among several such IDs, and which writes the selected ID in a web page. Every time content server 400 receives a request for web page data, content server 400 may send to mobile telephone 100 different advertisement ID by writing a different advertisement ID in a web page by using this program. In this way, it becomes possible to distribute a different banner advertisement each time the same mobile telephone sends a request for web page.

Also, when mobile telephone 100 sends a request for web page data to content server 400, mobile telephone 100 may include in the request an identifier identifying mobile telephone 100, and when content server 400 sends web page data to mobile telephone 100, content server 400 may store the identifier included in the request for web page data identifying mobile telephone 100 and advertisement ID written in the sent web page as history. Then when a request for web page data is sent from the same telephone 100 again, content server 400 may search an identifier for identifying mobile telephone 100 as a key in the stored advertisement ID history, and may send web page data with a different advertisement ID from the previously sent advertisement ID or an advertisement ID which has not yet been sent. In this way, it becomes possible to distribute a different banner advertisement each time content server 400 sends web page data to the same mobile telephone as in the above method.

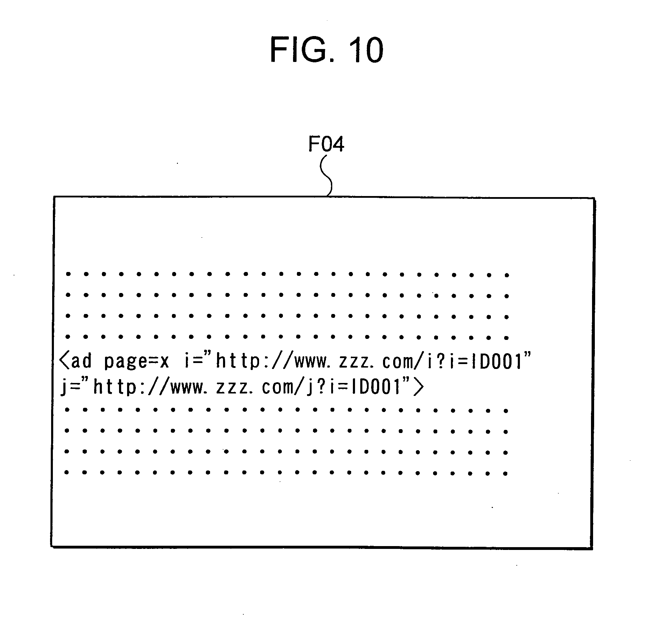

Also, it is possible to provide an HTML data conversion means in content server 400. By this, when creating web page data on content server 400, it is possible to write a server name storing advertisement IDs and banner advertisement IDs by, as shown in CHTML data F04 in Fig. 10, using [ad] which indicates that data constituting a web page is in another server, and it is also possible to, when sending web page data to a client device in response to a data request, send to a client device after converting web page data into data, as shown in Fig. 7 by the data conversion means.

In the above explanation of the present embodiment, data for banner advertisements is created on advertisement server 500. However, data created on other computer device may be used.

In the above explanation of the embodiment, CRTs are used as display units for content server 400, advertisement server 500, and advertiser server 600. However, instead of CRT, an LCD display, a plasma display, or an Electro Luminescent (EL) display may be used.

In the above explanation of the embodiment, as storage units for content server 400, advertisement server 500, and advertiser server 600, hard disks are used. However, not limited to this, other storage medium such as a magnetic or optical medium may be used if it is able to hold data after power is shut down.

In the above explanation of the present embodiment, when mobile telephone 100 requests advertisement server 500 for banner advertisement data, mobile telephone 100 sends an advertisement data request which includes telephone number data for identifying the client. However, data for identifying a client is not limited to telephone numbers, and may consist of other data which can identify the client such as a User IDentification (UID) which may consist of a device number identifying a mobile telephone.

In the above explanation of the present embodiment, data for identifying clients is stored in a ROM. However, a storage medium for storing data for identifying clients is not limited to ROM, and may be an IC card which stores subscriber information and individual identifying information such as a User Identity Module (UIM), which card is removable from a mobile telephone.

## Claims

1. An information providing method comprising:
a page request sending step for sending by a communication terminal to a second server device a page request for obtaining a first page generated by a first data file and a second data file, the communication terminal being capable of communicating, via a communication network, with each of a first server device storing the first data file and the second server device storing the second data file which includes a first data identifier for identifying the first data file and a first server identifier for identifying the first server device;
a page data sending step for sending, by the second server device, the second data file to the communication terminal in response to the page request;
a first data request sending step for sending by the communication terminal to the first server device, according to a content of the second data file and the first server identifier, a first data request including the first data identifier, the first data request being for obtaining the first data file;
a first data sending step for sending by the first server device to the communication terminal the first data file identified by the first data identifier in the first data request in response to the first data request; and
a page generating step for generating, by the communication terminal, the first page by using the second data file sent from the second server device and the first data file sent from the first server device.

2. The information providing method of Claim 1, further comprising:
a step for, carried out in the first data request sending step, including a communication terminal identifier for identifying the communication terminal in the first data request;
a storing step for, carried out after the first data sending step by the first server device, correlating and storing in a storage unit of the first server device the first data identifier, the communication terminal identifier, and a third data storing location identifier for identifying a storing location of a third data file which is for generating a second page which is related to the first data file; and
a step carried out after the page generating step, comprising:
an instruction input step for inputting an instruction of a user of the communication terminal;
a third data storing location identifier request sending step for sending by the communication terminal, in response to the instruction input in the instruction input step, a third data storing location identifier request requesting the third data storing location identifier including the communication terminal identifier and the first data identifier;
a third data storing location identifier sending step for reading the third data storing location identifier from the storage unit of the first server device based on the communication terminal identifier and the first data identifier in the third data storing location identifier request, by the first server device in response to the third data storing location identifier request, and sending the third data storing location identifier to the communication terminal;
a second page request sending step for sending by the communication terminal to a third server device specified by the third data storing location identifier, a second page request for obtaining the second page specified by the third data storing location identifier;
a second page data sending step for, in response to the second page request, sending by the third server device to the communication terminal the third data file; and
a second page generating step for generating the second page by the communication terminal by using the third data file sent from the third server device.

3. The information providing method of Claim 1,
wherein:
the first page is generated by using the second data file and a plurality of data files which are different from the second data file;
the second data file contains a plurality of data identifiers and a server identifier, the data identifiers being for identifying a plurality of data files which are different from the second data file and the server identifier being for identifying a server device which stores a plurality of data files which are different from the second data file;
the communication terminal sends, in the first data request sending step, to the first server device a plurality of data requests for obtaining the plurality of the data files based on the plurality of the data identifiers identifying the plurality of the data files which are different from the second data file and the server identifier identifying the server device which stores the plurality of the data files which are different from the second data file; and
the first server device, in response to the plurality of the data requests, sends a plurality of data files identified by the plurality of the data identifiers.

4. The information providing method of Claim 2,
wherein:
the first page is generated by using the second data file and a plurality of data files which are different from the second data file;
the second data file contains a plurality of data identifiers and a server identifier, the data identifiers being for identifying a plurality of data files which are different from the second data file and the server identifier being for identifying a server device which stores a plurality of data files which are different from the second data file;
the communication terminal sends, in the first data request sending step, to the first server device a plurality of data requests for obtaining the plurality of the data files based on the plurality of the data identifiers identifying the plurality of the data files which are different from the second data file and the server identifier identifying the server device which stores the plurality of the data files which are different from the second data file; and
the first server device, in response to the plurality of the data requests, sends a plurality of data files identified by the plurality of the data identifiers.

5. The information providing method of Claim 1, further comprising:
a first data request receive time obtaining step for, carried out by the first server device before the first data sending step, obtaining a time when the first server device receives the first data request;
wherein the first data file sent in the first data sending step differs depending on the time obtained in the first data request receive time obtaining step.

6. The information providing method of Claim 2, further comprising:
a first data request receive time obtaining step for, carried out by the first server device before the first data sending step, obtaining a time when the first server device receives the first data request;
wherein the first data file sent in the first data sending step differs depending on the time obtained in the first data request receive time obtaining step.

7. The information providing method of Claim 1,
wherein there are a plurality of the server devices which provide the first data file.

8. The information providing method of Claim 2,
wherein there are a plurality of the server devices which provide the first data file.

9. The information providing method of Claim 1, further comprising:
a conversion step for, carried out by the second server device in the page data sending step, converting a data file stored in the second server device, into the second data file including the first data identifier and the first server identifier, the data file using the first data file to generate the first page;
wherein a data converted in the conversion step is sent in response to the page request.

10. The information providing method of Claim 2, further comprising:
a conversion step for, carried out by the second server device in the page data sending step, converting a data file stored in the second server device, into the second data file including the first data identifier and the first server identifier, the data file using the first data file to generate the first page;
wherein a data converted in the conversion step is sent in response to the page request.

11. The information providing method of Claims 1,
wherein the communication terminal is a mobile telephone capable of using a mobile communication network which provides a communication service; and
wherein the communication paths is realized by using a mobile communication network which provides a communication service to the communication terminal.

12. The information providing method of Claims 2,
wherein the communication terminal is a mobile telephone capable of using a mobile communication network which provides a communication service; and
wherein the communication paths is realized by using a mobile communication network which provides a communication service to the communication terminal.

13. A server device comprising:
first data request receiving means for receiving a first data request which includes a first data identifier, and which is sent from a communication terminal for obtaining a first data file based on a second data file having a first data identifier identifying a first data file and a server device identifier for identifying a server device which stores the first data file; and
first data sending means for, in response to the first data request, sending to the communication terminal the first data file identified by the first data identifier in the first data request.

14. The server device of Claim 13, further comprising;
means for receiving the first data request further including a communication terminal identifier for identifying a communication terminal;
storing means for, after the first data sending means sends the first data file, correlating and storing, in the storage unit, the first data identifier, the communication terminal identifier, and a third data storing location identifier identifying a storing location of a third data file which is for generating a second page which is related to the first data file; and
third data storing location identifier sending means for, after the first data sending means sends the first data file, reading the third data storing location identifier from the storage unit and sending the third data storing location identifier to the communication terminal in response to a third data storing location identifier request including the first data identifier and the communication terminal identifier and requesting for the third data storing location identifier sent from the communication terminal and based on the first data identifier and the communication terminal identifier included in the third data storing location identifier request.

15. A program for causing a computer which is able to communicate with a communication terminal and has a storage unit for storing data to function as;
first data request receiving means for receiving a first data request which includes a first data identifier, and which is sent from a communication terminal for obtaining a first data file based on a second data file having a first data identifier identifying a first data file and a server device identifier for identifying a server device which stores the first data file; and
first data sending means for sending to the communication terminal, in response to the first data request, the first data file identified by the first data identifier included in the first data request.

16. A computer readable storage medium storing the program of Claim 15.
